# EUROPEAN PATENT SPECIFICATION

(11) **EP 1 269 722 B1**
(45) Date of publication and mention of the grant of the patent: **24.01.2007**
(21) Application number: 01925424.2
(22) Date of filing: 12.03.2001
(51) Int. Cl.: H04M 1/247, H04M 11/06

(54) **TELEPHONIC DEVICE FOR DEAF-MUTES**
TELEFONGERÄT FÜR TAUBSTUMME
DISPOSITIF TELEPHONIQUE POUR SOURDS-MUETS

(30) Priority: 13.03.2000 IT SS200003
(43) Date of publication of application: 02.01.2003
(73) Proprietor: Baldino, Giuseppe, 07041 Alghero (IT)
(72) Inventor: Baldino, Giuseppe, 07041 Alghero (IT)
(74) Representative: Zanella, Ireneo
(86) International application number: PCT/EP2001/002742
(87) International publication number: WO 2001/069895

(56) References cited:
- EP-A- 0 856 976
- US-A- 4 674 112
- US-A- 5 163 081
- US-A- 5 604 786
- US-A- 5 995 590
- PATENT ABSTRACTS OF JAPAN vol. 006, no. 128 (E-118), 14 July 1982 (1982-07-14) & JP 57 055649 A (OKI ELECTRIC IND CO LTD), 2 April 1982 (1982-04-02)
- PATENT ABSTRACTS OF JAPAN vol. 016, no. 271 (E-1218), 18 June 1992 (1992-06-18) & JP 04 063044 A (FUJITSU GENERAL LTD), 28 February 1992 (1992-02-28)

## Description

### Background of the invention

The present invention relates to a telephonic device for deaf-mutes according to the preamble of Claim 1.

As is known, the sound-auditive impairment in deaf-mutes and in persons with hearing disorders constitutes a hindrance to an independent use of the telephone, either for normal conversations and or help calls both in fixed and mobile telephony.

A first attempt made not to completely exclude deaf-mutes from the telephone field has been performed about thirty years ago, by providing in a telephone set a red light to be switched on during the phone rings for the coming calls and to be, actually, used by the deaf-mute to request the help of another person for answering the phone call. Thus, the impossibility of performing a direct answering operation by the deaf-mute person and the requirement of having another person available, caused a very poor diffusion of these prior devices.

On the other hand, a lot of different devices are at present known for converting written words, i.e. graphemes, into voiced words, i.e. phonemes, which propose different solutions such as, for example, a frequency tone recognition, a syllable and consonant recognition by a frequency meter, and so on, up to the most evolved technology of the IBM's apparatus, used in large-size computer. However, the latter devices are rather expensive, require a high number of component parts, a rather sophisticated software, and the provision of a like device both for the deaf-mute person performing the phone call and for the person answering said phone call. Other prior devices, moreover, require a syllabication of the consonants and vowels of the individual words to allow their identification, which constitutes a serious limitation and greatly increases the conversation time and cost.

In this disclosure, the person called by the deaf-mute or calling the deaf-mute will be generically indicated by the term "interlocutor".

However, the modern technology would allow the deaf-mutes to communicate by sending and receiving the SMS (short message service) messages using, for example, a portable phone; on the other hand, this method has been found as scarcely practical and unsuitable.

To provide the deaf-mutes with a possibility of using the telephone, a service called "il ponte dei dialoghi" (the communication bridge) has been introduced on May 2000, in Florence (Italy), and, in this service, all the phone calls of the deaf-mutes are conveyed in the form of messages which are read-out by operators communicating them by voice to the called parties; in such a method, the operators listen to the response communications of the deaf-mute interlocutors to write these messages as graphemes and send them as messages to said deaf-mutes.

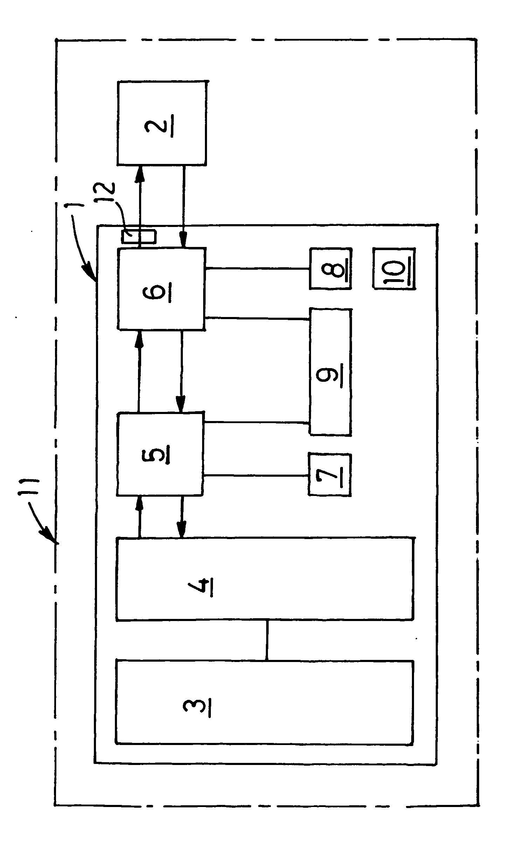

EP-A-0 856 976 discloses communication systems for deaf persons and deaf-mutes which are to be connected with a telephone set. A first embodiment for deaf persons is shown in Fig. 1 and a second embodiment for deaf-mutes is shown in Fig. 2. In both embodiments the input words from the telephone are previously stored in a store and then converted by a voice recognition unit by means of code which is readable by a computer, for example in an ASCII text. Said ASCII text can then be represented in an output unit, for example a monitor or display. Several components are required under which a speech synthesizer. Said components can be integrated in a computer with monitor and keyboard or, alternatively, can form a communication system to be connected with an existing computer.

### Summary of the invention

The aim of the present invention is to provide a telephonic device allowing deaf-mutes to communicate both by fixed telephony and mobile telephony, without requiring operators or identical telephonic devices to be provided to the called persons, but merely using conventional telephonic sets. In other words, the invention provides a telephonic device allowing deaf-mutes to directly call any telephonic subscribers of both the fixed and mobile telephonic networks, including conventional telephonic sets, i.e. both with or without displays.

Within the scope of the above mentioned aim, a main object of the present invention is to provide a telephonic device which can be used by a deaf-mute for communicating vocal messages with other persons.

According to one aspect of the present invention, the above mentioned aim and object, as well as yet other objects, which will become more apparent hereinafter, are achieved by a telephonic device for deaf-mutes having the features of Claim 1.

Further improvements of the invention are defined in the dependent claims.

The telephonic device according to the invention provides several important advantages.

At first, the subject telephonic device is very simple construction-wise and requires a reduced number of component parts, known per se, and a simple controlling software, the output messages (pre-keyed by the deaf-mute) being at first read-out by the deaf-mute on a display and then converted to a voiced or a phoneme form before sending them, whereas the input messages entering the telephonic device are at first converted from phonemes into graphemes and then transformed into a form which can be read by the deaf-mute on a display, the input and output telephonic messages of the other interlocutor being always provided as a succession of phonemes or words, or any other known manners. Accordingly, the inventive telephonic device can be indifferently used both for telephonic sets of the fixed telephonic network and for telephonic sets of the mobile telephonic network.

Another important advantage is that the telephonic device according to the present invention allows a deaf-mute to directly perform a telephonic conversation in a fully autonomous manner, i.e. without requiring the help of an operator. By the inventive device the deaf-mutes can, therefore, call each telephonic number of the fixed or mobile telephonic network, the interlocutor being preferably at once informed that he/she will talk with a deaf-mute, thereby said interlocutor will automatically adapt his/her voicing rate to indirectly allow the deaf-mute to write his/her messages without haste.

In this connection it should be pointed out that the inventive approach to perform a detection of the words, i.e. conversation graphemes and phonemes, by a "full-word" method, would allow to perform a direct and immediate conversation between the graphemes and phonemes stored in two provided stores, which would allow, the length of the message being the same, to reduce the conversation time, with respect to prior apparatus.

Actually, the conversation time is advantageously shortened also due to the provision of a function immediately signalling to the interlocutor the words he/she has voiced, and which are not present in the directory pre-stored in the two lexical and vocal stores, thereby the interlocutor can replace them by a synonym and so on.

Moreover, the conversation time will be shortened also due to the provision of a quick search or shift/search function which, after few consonants, allows to recognize and display the full words, which can be immediately confirmed or asserted by the deaf-mute, for example by using a dedicated key.

Yet another important advantage is that the device according to the present invention efficiently provides the deaf-mutes with the possibility of more actively participating to the every day life in relationship with other persons, and this both in the private life and in the working environment both due to an autonomous performing of the telephonic conversations and to a possibility of freely calling any telephonic interlocutors, (since the latter must not be provided with specifically designed telephonic sets or telephonic devices). Thus, the known emargination situation of deaf-mutes resulting from their impairment and incapacity to autonomously use the telephone, hitherto customary, is effectively removed.

To the above it should be added that the provided storing capability, of storing new words such as graphemes and corresponding phonemes in the lexical store and vocal store, advantageously allows to specifically broaden the terms of a given field, activity or profession, for example in the commercial, technical, hotel field, medical, hospital, legal field on so on. This can be advantageously easily performed by the same deaf-mutes with the help of a person for voice recording the new words or terms to be stored.

Yet a further advantage is that the inventive telephonic device, and, more specifically, the circuitry thereof controlling the two stores, as it will be disclosed hereinafter, can be, at will, made as a fitting to be associated with a conventional telephonic set, or can be integrated into a telephonic set proper.

Yet another advantage is that the device according to the present invention can also be used for writing phrases and then reproducing them by a loudspeaker, earphone, or the like, to pronounce them as voiced messages or in a reserved manner to other persons. This would allow the deaf-mute to freely autonomously conversate, for example in buying articles in stores, rail tickets, calling with other interlocutors and so on.

Yet a further advantage of the telephonic device according to the present invention is that it can be also used for sending graphic messages.

### Brief description of the drawings

Further characteristics, advantages and details of the telephonic device for deaf-mutes according to the present invention will become more apparent hereinafter from the following disclosure of said telephonic device which is schematically shown, merely by an example, in the sole accompanying figure, illustrating a block diagram of the telephonic device according to the invention.

In said block diagram:
the number 1 shows the telephonic device for deaf-mutes according to the invention,
the number 2 shows a telephonic set, either of a fixed or a mobile type, to which the telephonic device 1 can be connected,
the number 3 shows a keyboard,
the number 4 shows a display,
the number 5 shows a lexical store for graphically storing words or graphemes,
the number 6 shows a vocal store, for vocally storing the same words or graphemes, corresponding to the words or graphemes stored in the lexical store 5,
the number 7 shows a lexical memory reserve,
the number 8 shows a vocal story reserve,
the number 9 shows a "called person attention attracting" function,
the number 10 shows a "phoneme option" key,
the number 11 shows a telephonic set 2, either of the fixed or a mobile type, including the subject telephonic device 1, and
the number 12 shows a component providing on output vocal amplification, like a loudspeacker-volume adjuster assembly, earphone or the like.

The telephonic device 1 comprises moreover a software for managing the "traffic" of the used words, at the input of the vocal store 6 and at the output of the lexical store 5, and vice-versa, operating, for example, according to the known criterion of loading and unloading the data into/from a "first in - first out" manner, according to which the first entering data is also the first output data,as it will be disclosed in a more detailed manner hereinafter in relationship with the disclosure of the different preferably provided functions.

At first a function is provided for recognizing the word or phoneme written by the deaf-mute to allow the lexical store 6 to recognize if said grapheme is included in the graphemes stored in the lexical store 5.

A further function for recognizing input phonemes is moreover provided, for allowing the vocal store 6 to recognize if the input phoneme or word is included in the words or phonemes stored in said store 6.

A further function is moreover provided, which, at the start of a call answer, immediately signals to the called person the deaf-mute condition of the calling party, for example by a phrase of the type "attention, a special call from a deaf-mute person will follow" or the like, thereby the called person is immediately informed that he/she is receiving a special call made by a deaf-mute and accordingly, it will be necessary, during the call, to moderate the voice rate and allow the calling party time to write the response or conversation messages before starting the conversion of said messages from graphemes into phonemes for the answering.

An "interlocutor attention attracting" function is moreover provided which, if the interlocutor would use a word not stored in the vocal store 6, will signal by voice to the interlocutor that the word not pre-stored in the store 6 cannot be understood by the deaf-mute, for example by phrases of the type "please replace the word (the word not stored in the store 6 being repeated) by a synonym thereof". This function is provided for allowing the deaf-mute to telephonically communicate with any interlocutors, without requiring a help of an operator.

The use of a recognition by the two stores both of graphemes (i.e. an output telephonic traffic) and phonemes (an input telephonic traffic) by a "full word" recognizing method, allows moreover to reduce the answering time by the deaf-mute user, since by using a known quick search or shift/search function, by a string including few consonants, the word to be used is immediately fully displayed, thereby the deaf-mute will be able of immediately recognizing said word and, upon recognizing, he/she can immediately confirm said word, for example by using a dedicated key, without the need of fully writing said word. This would also contribute to reduce the overall conversation time.

A further function allowing to shorten the message writing time by the deaf-mute, is the "not stored word" function, which immediately visually signals to the deaf-mute, for example by an asterisk, that the keyed word has not been pre-stored, and, hence, cannot be at present used.

In this case, the deaf-mute would have two possibilities:
1) replace the not prestored word by a prestored synonym, or
2) ask a nearby person to pronounce said not stored word and consequently store said word in the vocal store 6 or in the vocal store reserve 8, upon storing the corresponding grapheme in the lexical store 5 or in the lexical store reserve 7.

A further function herein provided is the lexical store reserve 7 and vocal store reserve 8 function, allowing to customize and broaden the dictionary of the two stores 5 and 6, by adding the most frequently used words, not included in the basic words stored in the stores 5 and 6, such as specific terms of the technical, commercial or hotel fields, or terms of the medical or hospital field, law, fiscal terms and so on, as above indicated. In actual practice, store reserves 7 and 8 having a storing capability of 10% the storing capability of the stores 5 and 6, have been generally found as exceedingly sufficient. In this connection it should be pointed out that said lexical and vocal stores 5 and 6 can be broadened without limits.

The following disclosure will illustrate, by way of an example, an operating call made by the deaf-mute and an operating call received by said deaf-mute.

### A) Telephonic traffic from the deaf-mute device to any fixed or hand-held telephone.

The call is performed by the deaf-mute using the telephonic set 2, in a per se known manner; in particular, the deaf-mute can start to key on the keyboard 3 the message to be transmitted, i.e. at the start of the call, the individual message words being displayed successively on the display 4.

Upon keying the message, a pressing of the "optional phonemes" key will cause an immediate conversion of the keyed message graphemes into phonemes, and, accordingly, the calling party will hear (or optionally, the automatic answering apparatus will record, in the absence of the called party) a voice pronouncing the message to be transmitted.

If the "optional phoneme" key is not pressed, then the telephone will send the message as a written message and/or will operate like a conventional telephone.

### B) Telephonic traffic from a fixed or hand-held telephone

It should be apparent that, for a deaf-mute, the call warning cannot be a conventional sound or ring warning.

If the telephone of the deaf-mute is a mobile phone, then the call warning can be of a vibration type, as is known for the cellular telephones.

In the case of a fixed telephone, the fitting "teledrin" (of broad diffusion for example in Italy) with a vibration option (also showing the telephone number of the calling party) could be used.

In this connection it should be moreover apparent that it would be also possible to use other suitable systems.

The individual phonemes of the input voice message are immediately converted into graphemes to be displayed on the display 4, and which can be read by the deaf-mute, who can immediately answer by other suitable messages, as above shown at item A).

Thus, according to the present invention, as the death-mute writes a message by keying a word, the lexical store 5, upon recognizing each word, will actuate the pronunciation of said word in the vocal store 6, by allowing the phonemes emitted by the telephonic set 2 to arrive at the telephone, not shown, of the called party. In this sending step, it is not necessary to amplify said phonemes, since they must not be heard by any persons. The vocal store 6, on the other hand, is absolutely necessary for generating the electric signals to be transmitted, as in a conventional telephonic call.

Then, each time a word or word succession transmitted by any fixed or mobile set arrives at the telephone 2, then the vocal store 6 will at first recognize the word/words, if they are included in the stored words, and, in an affirmative case, will actuate the lexical store 5 for graphically displaying on the display 4 the grapheme/graphemes of the received word/words.

Upon receiving a word which has not been pre-stored in the vocal store 6 or in the vocal store reserve 8, then the above disclosed "interlocutor attention attracting" function will be actuated, for requesting the interlocutor to replace the not prestored word by a synonym thereof.

In the drawing, the reference number 12 indicates an element of the telephonic device providing an output vocal amplification, for example a loudspeaker-volume adjuster assembly, earphone or the like, allowing the deaf-mute to freely carry the device 1, key desired phrases and vocally reproduce them to be heard by other persons.

From the above constructional and functional disclosure of the telephonic device for deaf-mutes according to the present invention, it should be apparent that said device efficiently achieves the above mentioned aim and objects and related advantages.

In this connection it should be pointed out that a very important feature of the invention is the teaching of recognizing the graphemes and phonemes by a "full word" processing method, (in opposition to a prior process in which for reconstructing an individual word syllables are recognized and aggregated with one another), the provision of two stores, of like contents but with different functions, i.e. a vocal store and a grapheme recording store, allowing to actuate in a simple, reliable and quick manner the conversion of graphemes into phonemes and vice-versa.

It should be apparent that the disclosed operation is based on the use of exclusively recorded or prestored words. However, considering that specific lexical studies have shown that with a dictionary of about 100 preselected words it is possible to talk at an elementary level, whereas about 300 preselected words allow to talk with an average understanding degree, and considered that available stores allow to store thousands of phonemes and graphemes, at low cost and small size, for example by using CD's, it should be apparent that the conversations which can be performed according to the invention, and with an optional integrated dictionary, (and without the assistance of any operators), can be performed by deaf-mutes with a very great expression freeness and in a very short time.

In actual practice, a large-size display 4 can further facilitate the deaf-mute in seeing message even of a comparatively great length.

In the figure, the deaf-mute telephonic device 1 has been shown as a component separated from the telephonic set 2. This allows said device 1 to be easily connected to an existing telephonic set 2 either of a fixed or a mobile type.

The dash-dot frame 11 means that the deaf-mute telephonic device 1 and telephone set 2 can also be made as an individual set for deaf-mute persons.

In practicing the invention, those skilled in the art can replace individual components or functions, respectively managing software, by other functionally equivalent components, functions and managing software, without departing from the scope of the invention as hereinafter claimed.

## Claims

1. A telephonic device for deaf-mutes, adapted to be coupled to a telephonic set, said telephonic device comprising, operatively interconnected in a telephonic device casing, a keyboard, a display, store means, and an operating software, **characterized**
- **in that** two stores are provided (5, 6), i. e. a lexical store (5) on a display (4) side, for graphically storing therein a plurality of words, and a vocal store (6) on the telephonic set (2) side, for storing therein the same plurality of words;
- **in that** said operating software is adapted to perform a recognition of output words or graphemes, and a recognition of input words or phonemes;
- **in that** a transmission selection key (10) with an "optional phoneme" function is provided,
- **in that** said operating software is also adapted to convert graphemes into phonemes and to send them by telephone to an interlocutor when said transmission selection key (10) is pressed,
- **in that** said transmission selection key (10) is adapted, in its not pressed position, to allow the telephonic device (1) to transmit said graphemes without converting them and/or to operate as a conventional telephonic set (2), and
**in that** said operating software is also adapted to perform a reverse conversion from inputted phonemes into graphemes and to display them on said display (4).

2. A telephonic device according to claim 1, **characterized in that** said operating software is adapted to operate according to the FIFO (First in First out) mode and to perform the recognition of the output words or graphemes and inlet words or phonemes by a "full word" mode of operation.

3. A telephonic device according to claim 1, **characterized in that** said operating software is adapted to carry out a "signaling function" (9) for signaling to the interlocutor, for each call made by the deaf-mute user, that the calling party is a deaf-mute.

4. A telephonic device according to claim 1, **characterized in that** said operating software is adapted to carry out a "signaling function" for signaling to the interlocutor that a word thereof must be replaced by a synonym or other words, as said word is not included in the dictionary of the lexical store (5) and the vocal store (6).

5. A telephonic device according to claim 1, **characterized in that** said operating software is adapted to carry out a quick search or shift/search function for immediately displaying on said display (4) words being keyed by the deaf-mute user and which have been recognized upon writing few consonants of said words, thereby the deaf-mute user can immediately confirm said words without fully writing said words.

6. A telephonic device according to claim 1, **characterized in that** said operating software is adapted to carry out a "signaling function" for signaling to the deaf-mute by an asterisk, or the like, that the keyed word is not included in the dictionary stored in said lexical and voice stores (5, 6) or in store reserve means (7, 8) thereof.

7. A telephonic device according to claim 1, **characterized in that** said operating software is adapted to allow the deaf-mute user to inegrate the dictionary stored in said stores (5 and 6) or in said store reserve means (7 and 8), i.e. by storing himself words in said lexical stores (5 and 7) or storing with the help of a person voicing said words in said vocal stores (6 and 8).

8. A telephonic device according to claim 1, **characterized in that** said telephonic device (1) is coupled to a telephonic set (2) either of the fixed or the mobile telephonic network.

9. A telephonic device according to claim 1, **characterized in that** said telephonic device (1) is built-in in a telephonic set (2) of either the fixed or the mobile telephonic network.

10. A telephonic device according to one or more of the preceding claims, **characterized in that** said telephonic device (1) comprises, on an output side thereof, a component (12) or device for acoustically reproducing the electric signals of the output phonemes, such as a loudspeacker or an earphone.

## Patentansprüche

1. Telefongerät für Taubstumme, das zum Verbinden mit einem Telefonset angepasst ist, wobei das Telefongerät eine Tastatur, eine Anzeige, Speichermittel und eine Betriebssoftware aufweist, die in einem Gehäuse des Telefongeräts wirkend miteinander verbunden sind, **dadurch gekennzeichnet,**
- **dass** zwei Speicher (5, 6), d.h. ein lexikalischer Speicher (5) auf der Seite einer Anzeige (4) für das grafische Speichern einer Mehrzahl von Wörtern und ein Sprachspeicher (6) auf der Seite des Telefonsets (2) zum Speichern derselben Mehrzahl von Wörtern, vorgesehen sind;
- **dass** die Betriebssoftware so ausgebildet ist, dass sie ausgegebene Wörter oder Graphernes und eingegebene Wörter oder Phoneme erkennen kann;
- **dass** eine Übertragungs-Auswahltaste (10) mit einer "optionalen Laut"-Funktion vorgesehen ist,
- **dass** die Betriebssoftware auch so ausgebildet ist, dass sie Grapheme in Phoneme konvertieren und telefonisch an einen Gesprächspartner senden kann, wenn die Übertragungs-Auswahltaste (10) gedrückt wird,
- **dass** die Übertragungs-Auswohltaste (10) so ausgebildet ist, dass sie es in nicht gedrücktem Zustand dem Telefongerät (1) ermöglicht, die Grapheme ohne ihre Konvertierung zu übertragen und/oder wie ein normales Telefonset (2) zu arbeiten, und
- **dass** die Betriebssoftware auch so ausgebildet ist, dass sie eine Rückwärts-Konvertierung aus eingegebenen Phonemen in Grapheme und ihre Anzeige auf der Anzeige (4) durchführen kann.

2. Telefongerät nach Anspruch 1, **dadurch gekennzeichnet, dass** die Betriebssoftware so ausgebildet ist, dass sie nach dem FIFO-Prinzip (first in first out) arbeitet und die ausgegebenen Wörter oder Grapheme und die eingegebenen Wörter oder Phoneme durch eine Betriebsweise nach dem "Vollwort"-Modus erkennt.

3. Telefongerät nach Anspruch 1, **dadurch gekennzeichnet, dass** die Betriebssoftware so ausgebildet ist, dass sie eine "Signalfunktion" (9) ausführt und bei jedem von einem Taubstummen initialisierten Gespräch an den Gesprächspartner ein Signal abgibt, dass der Anrufer taubstumm ist.

4. Telefongerät nach Anspruch 1, **dadurch gekennzeichnet, dass** die Betriebssoftware so ausgebildet ist, dass sie eine "Signalfunktion" ausführt und an den Gesprächspartner ein Signal abgibt, dass ein Wort durch ein Synonym oder ein anderes Wort ersetzt werden muss, weil das Wort in dem Lexikon des lexikalischen Speichers (5) und des Sprachspeichers (6) nicht vorhanden ist.

5. Telefongerät nach Anspruch 1, **dadurch gekennzeichnet, dass** die Betriebssoftware so ausgebildet ist, dass sie eine schnelle Suche oder eine shift/search-Funktion mit dem unverzuglichen Anzeigen von Wörtern auf der Anzeige (4) ausführen kann, die von dem Taubstummen eingegeben werden und die beim Schreiben weniger Konsonanten dieser Wörter erkannt werden, so dass der Taubstumme diese Wörter sogleich bestätigen kann ohne sie voll ausschreiben zu müssen.

6. Telefongerät nach Anspruch 1, **dadurch gekennzeichnet, dass** die Betriebssoftware so ausgebildet ist, dass sie eine "Signalfunktion" ausführt und dem Taubstummen durch ein Sternchen oder dgl. anzeigt, dass das eingegebene Wort nicht in dem lexikalischen Speicher und dem Sprachspeicher (5,6) oder in Reservespelchern (7, 8) gespeichert ist.

7. Telefongerät nach Anspruch 1, **dadurch gekennzeichnet, dass** die Betriebssoftware so ausgebildet ist, dass sie es dem Taubstummen ermöglicht, Wörter in das in den Speichern (5 und 6) oder den Reservespeichern (7 und 8) abgelegte Lexikon aufzunehmen, d.h. selbst Wörter in den lexikalischen Speichern (5 und 7) oder mit Hilfe einer Person, die diese Wörter in die Sprachspeicher (6 und 8) spricht, zu speichern.

8. Telefongerät nach Anspruch 1, **dadurch gekennzeichnet, dass** das Telefongerät (1) mit einem Telefonset (2) entweder des Festnetzes oder eines mobilen Netzes verbunden ist

9. Telefongerät nach Anspruch 1, **dadurch gekennzeichnet, dass** das Telefongerät (1) in einem Telefonset (2) entweder des Festnetzes oder eines mobilen Netzes eingebaut ist.

10. Telefongerät nach einem oder mehreren der vorangehenden Ansprüche, **dadurch gekennzeichnet, dass** das Telefongerät auf der Ausgangsseite eine Komponente (12) oder eine Einrichtung zum akustischen Wiedergeben der elektrischen Signale der ausgegebenen Laute aufweist, wie einen Lautsprecher oder einen Kopfhörer.

## Revendications

1. Dispositif téléphonique pour sourd-muet adapté pour être couplé à un téléphone, ledit dispositif téléphonique comprenant, interconnecté de manière opérationnelle dans un boîtier de dispositif téléphonique, un clavier, un écran, des moyens de mémoire et un logiciel, **caractérisé:**
**en ce que** l'on prévoit deux mémoires (5, 6) c'est-à-dire une mémoire lexicale (5) d'un côté d'écran (4) pour mémoriser de manière graphique à l'intérieur de celle-ci une pluralité de mots et une mémoire vocale (6) du côté du téléphone (2), pour mémoriser à l'intérieur de celle-ci la même pluralité de mots;
**en ce que** ledit logiciel est adapté pour réaliser une reconnaissance des mots produits ou graphèmes et une reconnaissance des mots d'entrée ou phonèmes;
**en ce que** l'on prévoit une touche de sélection de transmission (10) avec une fonction de « phonème facultatif »,
**en ce que** ledit logiciel est également adapté pour convertir les graphèmes en phonèmes et pour les envoyer par téléphone à un interlocuteur ou lorsque l'on appuie sur ladite touche de sélection de transmission (10),
**en ce que** ladite touche de sélection de transmission (10) est adaptée, dans sa position non enfoncée, pour permettre au dispositif téléphonique (1) de transmettre lesdits graphèmes sans les convertir et/ou pour fonctionner comme un téléphone classique (2), et
**en ce que** ledit logiciel est également adapté pour réaliser une conversion inversée des phonèmes en graphèmes et pour les afficher sur ledit écran (4).

2. Dispositif téléphonique selon la revendication 1, **caractérisé en ce que** ledit logiciel est adapté pour fonctionner selon le mode FIFO (premier entré, premier sorti) et pour réaliser la reconnaissance des mots produits ou graphèmes et des mots d'entrée ou phonèmes par un mode de fonctionnement « mot complet ».

3. Dispositif téléphonique selon la revendication 1, **caractérisé en ce que** ledit logiciel est adapté pour réaliser une « fonction de signalisation » (9) pour signaler à l'interlocuteur, pour tous les appels réalisés par l'utilisateur sourd-muet, que la partie appelante est un sourd-muet.

4. Dispositif téléphonique selon la revendication 1, **caractérisé en ce que** ledit logiciel est adapté pour réaliser une « fonction de signalisation » pour signaler à l'interlocuteur que son mot doit être remplacé par un synonyme ou d'autres mots, étant donné que ledit mot n'est pas inclus dans le dictionnaire de la mémoire lexicale (5), ni de la mémoire vocale (6).

5. Dispositif téléphonique selon la revendication 1, **caractérisé en ce que** ledit logiciel est adapté pour réaliser une recherche rapide ou fonction de déplacement/recherche pour afficher immédiatement sur ledit écran (4) les mots qui ont été composés par l'utilisateur sourd-muet et qui ont été reconnus suite à l'écriture de quelques consonnes desdits mots, ainsi l'utilisateur sourd-muet peut immédiatement confirmer lesdits mots sans écrire complètement lesdits mots.

6. Dispositif téléphonique selon la revendication 1, **caractérisé en ce que** ledit logiciel est adapté pour réaliser une « fonction de signalisation » pour signaler au sourd-muet par un astérisque ou similaire, que le mot tapé n'est pas inclus dans le dictionnaire stocké dans lesdites mémoires lexicales et vocales (5, 6) ou dans ses moyens de réserve de mémoire (7, 8).

7. Dispositif téléphonique selon la revendication 1, **caractérisé en ce que** ledit logiciel est adapté pour permettre à l'utilisateur sourd-muet d'intégrer le dictionnaire stocké dans lesdites mémoire (5 et 6) ou dans lesdits moyens de réserve de mémoires (7 et 8), c'est-à-dire en stockant lui-même les mots dans lesdites mémoires lexicales (5 et 7) ou en stockant à l'aide d'une personne qui prononce lesdits mots dans lesdites mémoires vocales (6 et 8);

8. Dispositif téléphonique selon la revendication 1, **caractérisé en ce que** ledit dispositif téléphonique (1) est couplé à un téléphone (2) fixe ou mobile.

9. Dispositif téléphonique selon la revendication 1, **caractérisé en ce que** ledit dispositif téléphonique (1) est intégré dans un téléphone (2) fixe ou mobile.

10. Dispositif téléphonique selon une ou plusieurs des revendications précédentes, **caractérisé en ce que** ledit dispositif téléphonique (1) comprend, sur son côté de sortie, un composant (12) ou dispositif pour reproduire de manière acoustique les signes électriques des phonèmes produits, tels qu'un haut-parleur ou un écouteur.
